# FASCICULE DE BREVET EUROPEEN

(11) **EP 3 566 459 B1**
(45) Date de publication et mention de la délivrance du brevet: **02.06.2021**
(21) Numéro de dépôt: 18701513.6
(22) Date de dépôt: 03.01.2018
(51) Int. Cl.: H04Q 9/00, G01D 4/00

(54) **SYSTEME DE CARACTERISATION DE LA CONSOMMATION**
SYSTEM ZUR CHARAKTERISIERUNG DES VERBRAUCHS
SYSTEM FOR CHARACTERISING CONSUMPTION

(30) Priorité: 04.01.2017 FR 1750065
(43) Date de publication de la demande: 13.11.2019
(73) Titulaire: Demain ES, 93108 Montreuil (FR)
(72) Inventeur: BOURDEL, Benoit, 75015 Paris (FR); VULLIERME, Raphaël, 75018 Paris (FR)
(74) Mandataire: IP Trust
(86) Numéro de dépôt international: PCT/FR2018/050013
(87) Numéro de publication internationale: WO 2018/127658

(56) Documents cités:
- EP-A1- 2 930 471
- EP-A1- 3 048 566
- FR-A1- 2 954 506

## Description

### Domaine de l'invention

La présente invention concerne le domaine de l'analyse de la consommation de fluide, notamment de la consommation électrique d'un site équipé d'un compteur principal doté d'un indicateur visuel de la consommation globale, par exemple une diode LED métrologique, un disque rotatif ou un indicateur digital mécanique ou électrique ou encore la consommation d'eau ou de gaz, sur une installation équipée d'un compteur métrologique comportant un élément variant d'apparence en fonction de la consommation instantanée.

L'invention concerne plus précisément un système fournissant des informations relatives à la nature des équipements à l'origine des différents postes de consommation de fluide, afin de permettre un audit de consommation et le cas échéant une optimisation des équipements et/ou une supervision des équipements.

De telles informations sont fournies par des compteurs connectés dits « intelligents », par exemple le compteur commercialisé par la société ITRON sous le nom de LINKY (nom commercial), procédant à un relevé périodique, par exemple horaire, des consommations sur un réseau électrique local et transmettant les données à un service du fournisseur ou du distributeur d'énergie qui procède à des traitements pour ces propres besoins et accessoirement pour fournir des indications à son client.

Ces compteurs délivre une information représentative de la consommation sous la forme d'une led qui flashe à chaque wattheure consommé ou encore du passage du marquage visuel sur le disque des compteurs électromécaniques. La mesure du temps écoulé entre deux flashs de la led, ou le cas échéant, entre deux passages du marquage du disque d'un compteur électromécanique permet de calculer la valeur de la puissance consommée dans l'installation.

On connaît également le brevet européen EP1260090 décrivant un procédé de surveillance d'une consommation d'énergie, comprenant les étapes ci-dessous consistant à :
(a) mesurer une consommation d'énergie, en utilisant un dispositif numérique de mesure de l'électricité commandé par un microprocesseur, à des intervalles réguliers ;
(b) stocker les données acquises par les mesures d'intervalles, lesdites données représentant une consommation d'énergie mesurée pour chacun d'une pluralité desdits intervalles réguliers, dans une mémoire non volatile non alimentée par batterie dudit dispositif de mesure, dans lequel lesdites données acquises par lesdites mesures d'intervalles sont stockées d'une manière qui permet la récupération de mesures pour des intervalles individuels de ladite pluralité d'intervalles ;
(c) recevoir une demande pour lesdites données stockées, sur une ligne d'alimentation, en provenance d'un transpondeur; et
(d) en réponse à ladite demande, transmettre lesdites données stockées, sur ladite ligne d'alimentation, audit transpondeur.

Ces solutions sont aujourd'hui contestées car les usagers craignent que la collecte par un opérateur tiers de la courbe de charge, révélatrice d'informations privées telles que les présences et absences du domicile, le type de chauffage, les moments où une personne prend une douche ou la révélation d'utilisation « hors norme » du réseau, par exemple la présence de lampes à forte puissance utilisées pour la culture de plants de cannabis, ne porte atteinte au respect de la vie privée.

On a donc développé des solutions indépendantes, permettant de capter une information accessible depuis le compteur de fluide (électricité, eau, gaz ,...) par un équipement autonome placé sur le compteur d'énergie du réseau local afin de fournir une mesure de la consommation selon un mode réservé à l'usager.

### Etat de la technique

On connaît dans l'état de la technique le brevet français FR2954506 qui décrit un dispositif d'acquisition de la mesure d'un compteur électrique compatible avec les deux types de compteurs communément rencontrés, électromécanique et digital. Lorsqu'ils sont prévus pour la lecture d'un compteur de type électromécanique, les capteurs connus fonctionnent avec une source de lumière (visible ou invisible) et un capteur photoélectrique. La source de lumière est destinée à éclairer le disque tournant tandis que le capteur photoélectrique reçoit la lumière réfléchie par le disque. La variation d'intensité lumineuse réfléchie qui se produit lors du passage de l'index du disque est ainsi détectée par le capteur photoélectrique qui fournit un signal électrique présentant une impulsion à chaque passage de l'index et donc à chaque tour du disque tournant. Le comptage de ces impulsions et la mesure de leur fréquence permettent à l'appareil d'en déduire la consommation instantanée mesurée par le compteur.

On connaît aussi la demande de brevet européen EP3048566 décrivant un dispositif de traitement d'informations comprend: un lecteur, un calculateur d'index, un processeur d'estimation et un afficheur. Le lecteur lit des informations de correspondance indiquant des types de dispositifs mesurés par des premiers compteurs de puissance d'une pluralité de compteurs de puissance, chaque compteur de puissance mesurant la consommation d'énergie d'un dispositif correspondant pour acquérir des données de puissance. La calculatrice d'index calcule un index à partir des données de puissance. Le processeur d'estimation estime des candidats pour un type de dispositif mesuré par un second compteur de puissance basé sur un indice calculé à partir des données de puissance du dispositif mesuré par le second compteur de puissance, utilisant des données d'apprentissage qui sont l'indice calculé à partir des données de puissance des dispositifs mesurée par les premiers compteurs de puissance, le second compteur de puissance étant inclus dans la pluralité de compteurs de puissance et étant différent des premiers compteurs de puissance. L'afficheur visualise les types de dispositifs candidats estimés par le processeur d'estimation.

### Inconvénient de l'art antérieur

Les solutions connues dans l'état de la technique sont basées sur la lecture d'une diode métrologiques ou d'un disque ou indicateur digital, mais ne fournissent que des informations relativement grossières et permettent de réaliser des répétiteurs de la consommation globale d'un réseau local, mais difficilement de fournir des informations pertinentes et fiables sur la nature des équipements consommant le fluide.

### Solution apportée par l'invention

Afin de remédier à ces inconvénients, la présente invention concerne selon son acception la plus générale un système de caractérisation de la consommation d'un ensemble d'équipements alimentés par un réseau local équipé d'un compteur métrologique délivrant une information visuelle de consommation, comprenant :
a) un capteur apte à être apposé sur ledit compteur, comprenant :
   - un moyen d'acquisition desdites informations visuelles
   - un moyen de communication radiofréquence avec un relai local
b) un relai local comprenant :
   - des moyens de réception et de prétraitement des données provenant dudit capteur
   - un moyen de communication avec un serveur distant pour la transmission des données horodatées
c) un serveur distant exécutant un traitement des données transmises par ledit relai local pour calculer des informations de caractérisation et la transmission desdites informations à un équipement connecté distant
   caractérisé en ce que ledit traitement consiste à :
   - enregistrer dans une mémoire lesdites données horodatées, dans un espace spécifique audit relai local, lesdites informations horodatées présentant une fréquence d'actualisation temporelle supérieure à 200 millisecondes
   - effectuer un prétraitement consistant à éliminer des données horodatées par application d'un filtre de conformité
   - appliquer un traitement d'apprentissage automatique (machine learning) auxdites données pour calculer des profils de consommation associés à un identifiant d'un type d'équipement.

L'invention concerne la mesure de la consommation électrique, ou d'eau ou de gaz, et plus généralement de tout fluide distribué dans un réseau comportant un compteur métrologique au niveau de l'alimentation d'un bâtiment. On entend par compte métrologique un équipement de mesure de la consommation de fluide présentant une moyen d'indication visuel de l'évolution de la consommation, par exemple une source lumineuse activée ponctuellement lors du passage d'un seuil de consommation, ou un disque mécanique portant un repère, dont la vitesse de rotation est fonction de la consommation, ou encore un affichage électronique ou mécanique sous forme de chiffres défilant ou d'une aiguille mobile.

Avantageusement, ledit serveur comporte une pluralité d'espaces mémoires spécifiques pour enregistrer dans chacun les données provenant d'un relai local particulier, et en ce que le traitement d'apprentissage automatique est appliqué aux données horodatées provenant d'une pluralité d'espaces mémoires spécifiques.

De préférence, ledit serveur comporte en outre des moyens pour produire une alerte numérique en fonction du résultat du traitement d'apprentissage automatique.

Selon un mode de réalisation avantageux, ledit boîtier comprend un périphérique constitué par une pièce autocollante pouvant être collé sur la face avant du compteur, s'ouvrant sur un capteur photosensible détectant les impulsions lumineuses et les transmettant à un circuit électronique intégré dans le boîtier.

Avantageusement, ledit boîtier comporte un calculateur pilotant un module de radio transmission pour la transmission des données vers le relai local.

Selon un autre mode de réalisation particulier, ledit serveur est commandé par un code informatique pour l'exécution de traitements des données enregistrées pour un site afin d'en extraire des valeurs d'entrée pour les algorithmes d'apprentissage machine.

Avantageusement, lesdits traitements comportent :
- un lissage des données enregistrées pour un site, par un calcul d'une valeur moyenne sur une fenêtre temporelle glissante
- un découpage des données enregistrées et des données lissées pour un site en un ensemble de fenêtres d'une durée de Nᵢ minutes (Nᵢ variant en fonction du type d'appareil à détecter) et décalées les unes par rapport aux autres de Mᵢ minutes (Mᵢ variant en fonction de Nᵢ)
- une décomposition des fenêtres en transformée de Fourier, en transformée en ondelettes et en régression locale (type LOESS)
- une étape d'Analyse en Composantes Principales (PCA) réalisée sur l'ensemble des vecteurs afin de réduire leur dimension à Dᵢ compris entre 10 à 1000
- un traitement de K-Moyennes exécuté sur l'ensemble des vecteurs réduits pour déterminer (Kᵢ) modes de fonctionnement différents
- la comparaison des résultats de l'opération de K-Moyennes avec des motifs de consommations connues.

### Description détaillée d'un exemple non limitatif de l'invention

La présente invention sera mieux comprise à la lecture de la description qui suit, se référent à un exemple non limitatif de réalisation où :
- la figure 1 représente une vue schématique d'un capteur selon l'invention
- la figure 2 représente une vue schématique de l'architecture matérielle d'un boîtier selon l'invention
- la figure 3 représente une vue schématique de l'architecture matérielle d'un relai local selon l'invention

### Description du capteur

Le capteur est constitué par un boîtier (1) pouvant être apposé sur un compteur électrique (2), par exemple par une surface autocollante. Le compteur (2), par exemple un compteur LINKY (non commercial) présente une fenêtre (3) de visualisation d'un afficheur digital et une fenêtre (4) s'ouvrant sur une diode électroluminescente émettant une impulsion lumineuse à chaque wattheure consommé sur le réseau électrique sur lequel est disposé le compteur (1). Un périphérique (5) est constitué par une pièce (5) autocollante pouvant être collé sur la face avant du compteur. Cette pièce s'ouvre sur un capteur photosensible (6) détectant les impulsions lumineuses et les transmettant à un circuit électronique intégré dans le boîtier (1).

Ce circuit est alimenté par une pile (7) et comprend un calculateur (8) pilotant un module de radio transmission (9), fonctionnent sur la fréquence 433 MHz, ou selon le protocole Bluetooth faible énergie pour transmettre un signal chaque fois que le capteur photosensible (6) détecte une impulsion lumineuse.

### Description du relai

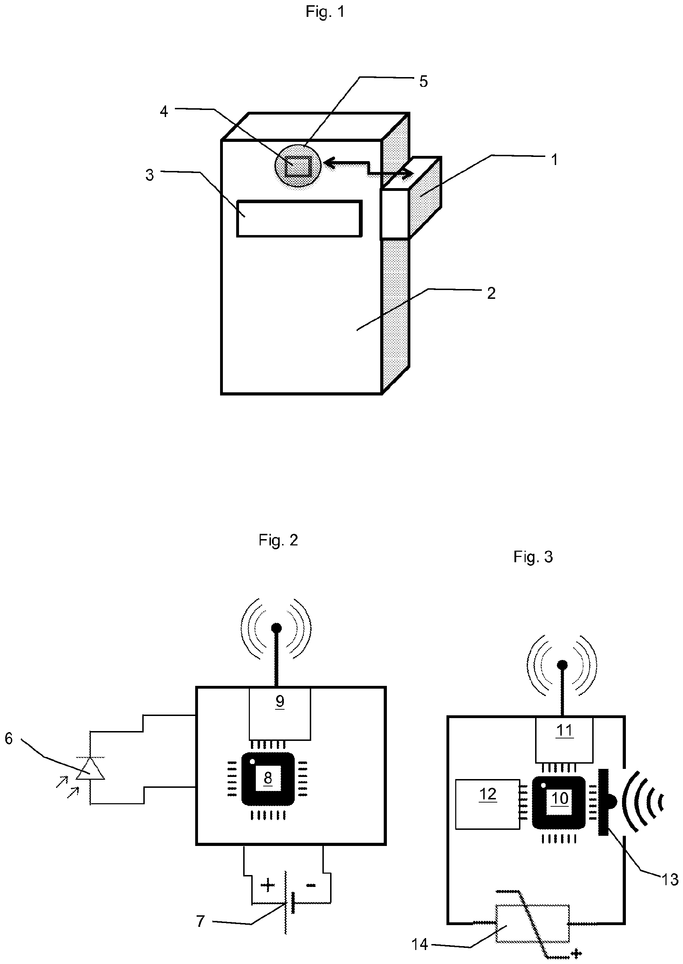

Le relai local décrit en figure 3 comprend un calculateur (10) recevant les données provenant d'un module Bluetooth faible énergie (11) apparié avec le module Bluetooth faible énergie (9) du capteur (1).

Le relais local récupère les données du capteur, les horodate, réalise quelques mesures de son environnement (température, humidité, CO2, bruit, luminosité) et transfère l'ensemble de ces données sur un serveur distant en ligne.

Il comprend aussi un calculateur (10) commandant l'enregistrement des informations dans une mémoire locale (12).

Le calculateur (10) réalise un traitement consistant à calculer le délai écoulé entre deux informations consécutives transmises par le capteur (1) et à enregistrer ce délai sous une forme horodatée dans la mémoire (12).

Il commande également la transmission périodique des informations horodatées à un serveur par l'intermédiaire d'un module (13), par exemple un module WIFI ou un module 3G.

Le relai local comporte également un ou plusieurs capteurs, par exemple un capteur de température (14), fournissant des informations d'environnement qui sont également transmises sous une forme horodatée au serveur. Ces informations permettent de fournir des informations contextuelles qui seront exploitées par le serveur.

### Traitement des informations transmises par le relai local

Les informations horodatées transmises par le relai local sont associées à un identifiant du réseau local concerné.

L'information est encryptée selon le protocole RSA2048. Elle présente par dans l'exemple décrit le format suivant :
[Id capteur ; Id message ; dernière mesure ; avant-dernière mesure ; avant-avant-dernière mesure ; Checksum]

« Id message » correspond à un indicatif propre à chaque message émis.

« Id capteur » correspond à un indicatif propre à chaque capteur.

Le serveur réalise un prétraitement de ces données pour vérifier la cohérence des données et supprime les données anormales (par exemple les données dont les informations d'horodatage sont inférieures à une durée seuil...) et correspondant à des erreurs de mesures. Ces données sont ensuite ré-échantillonnées à une fréquence donnée d'un herz par exemple.

Le serveur procède ensuite à un ensemble de traitements sur ces données enregistrées pour un site afin d'en extraire des valeurs d'entrée pour les algorithmes de machine-learning :
- un lissage des données enregistrées pour un site, par un calcul d'une valeur moyenne sur une fenêtre temporelle glissante
- un découpage des données enregistrées et des données lissées pour un site en un ensemble de fenêtres d'une durée de Nᵢ minutes (Nᵢ variant en fonction du type d'appareil à détecter) et décalées les unes par rapport aux autres de Mᵢ minutes (Mᵢ variant en fonction de Nᵢ)
- une décomposition des fenêtres en transformée de Fourier, en transformée en ondelettes et en régression locale (type LOESS)
Le résultat de ces régressions pour chaque fenêtre forme un vecteur unique par fenêtre. Ce vecteur comporte selon les paramétrages choisis de quelques centaines à plusieurs milliers de variables.

Une PCA (Analyse en Composantes Principales) est réalisée sur l'ensemble des vecteurs afin de réduire leur dimension à Dᵢ (allant de 10 à 1000).

Un algorithme de K-Moyennes est ensuite exécuté sur l'ensemble des vecteurs réduits pour déterminer (Kᵢ) modes de fonctionnement différents. Le partitionnement en k-moyennes (ou k-Mean en anglais) est une méthode de partitionnement de données permettant de résoudre un problème d'optimisation combinatoire connu de l'homme du métier.

Les k-moyennes sont utilisées en apprentissage non supervisé où l'on divise des observations en k partitions. Les nuées dynamiques sont une généralisation de ce principe, pour laquelle chaque partition est représentée par un noyau pouvant être plus complexe qu'une moyenne. L'algorithme de k-Moyenness est s'apparente à l'algorithme de quantification de Lloyd-Max.

Les résultats de l'opération de K-Moyennes renseignent les différents motifs existants sur les données enregistrées pour un site. Les centroïdes et les vecteurs proches de ces centroïdes permettent de générer l'allure de chaque motif (en anglais « pattern ») de consommation.

L'allure de chaque motif peut être comparée avec des motifs déjà connus sur une mémoire partagée du serveur pour identifier l'appareil en fonctionnement et cela en utilisant un algorithme de "pattern récognition" basé sur des réseaux neuronaux. Si l'algorithme n'est pas capable d'identifier le pattern à partir des patterns existants dans la mémoire partagée, l'utilisateur final de la technologie peut être amené à renseigner ou valider l'appareil utilisé. Le pattern, une fois identifié, est ajouté à la mémoire partagée.

Une fois l'ensemble des motifs reconnu et identifié, un algorithme de reconnaissance de motif parcourt l'ensemble des données enregistrées pour un site pour identifier la présence ou non de ce pattern à chaque instant.

L'ensemble de l'algorithme décrit ci-dessus permet de générer un détail des consommations de chaque appareil, reconnu par son motif, dans le logis de l'utilisateur final ainsi que de renforcer la connaissance globale des motifs sur la mémoire partagée.

Un deuxième algorithme décrit ci-dessous se charge de produire les informations et alertes à partir des résultats produits par le premier algorithme ci-dessus.

Pour chaque appareil, chaque utilisation est inscrite dans un espace à N dimension avec, entre-autre, les paramètres suivants : temps d'utilisation, consommation totale, temps depuis dernière utilisation, puissance spécifique, nombre d'utilisations quotidiennes/semestrielles/mensuelles, etc.
À chaque nouvelle utilisation, une alerte peut être générée suivant les conditions suivantes :
- La distance géométrique entre cette utilisation et la moyenne des utilisations est supérieure à une distance Dᵢ. Cette distance Dᵢ est évaluée en fonction de la distribution statistique des utilisations, du type d'appareil et des retours des utilisateurs finaux.
- Une variation continue de la position de la moyenne sur des durées de quelques semaines à quelques années.
- La position de l'utilisation dans une zone définie comme dangereuse.

Chaque utilisation est individuellement et sans condition spécifique transmise à l'utilisateur final dans son historique domestique (timeline).

Suivant un arbre décisionnel prédéfini, à partir des résultats du premier algorithme de machine-learning, des conseils sont générés pour aider l'utilisateur final à réduire sa consommation et sa facture d'électricité.

### Corrélation avec d'autres sources d'information

Selon une première option, le système comprend en outre un ou plusieurs capteurs additionnels fournissant au relai local des informations complémentaires également horodatées. Ces capteurs des capteurs d'environnement local, par exemple :
- un capteur de température
- un capteur de consommation d'un autre fluide
- un capteur d'ouverture de porte ou de fenêtre.

Les informations recueillies par le relai local sont transmises au serveur qui les exploite pour établir des traitements de corrélation permettant de déclencher des actions telles que des alarmes. Par exemple, une élévation de la consommation électrique ou de gaz se produisant dans un intervalle de temps où la température baisse significativement peu traduire une anomalie (bris de fenêtre, porte restée ouverte,...).

De même, la prise en compte de plusieurs compteurs de fluides différents permet d'établir des traitements de caractérisation du fonctionnement de certains équipements, tels qu'un lave-linge ou une douche.

Selon une autre option, le relai local comprend un moyen d'analyse des accès WIFI (« probe request ») pour transmettre périodiquement au serveur les informations sur les équipements connectés localement par Wifi. Ces données sont traitées par le serveur pour analyser la corrélation avec les données de consommation et déclencher des actions en fonction du résultat de ces traitements.

## Revendications

1. Système de caractérisation de la consommation d'un fluide d'un ensemble d'équipements alimentés par un réseau local équipé d'un compteur métrologique (2) délivrant une information visuelle de consommation, comprenant :
a) un capteur (1) apte à être apposé sur ledit compteur, comprenant :
- un moyen d'acquisition desdites informations visuelles (6)
- un moyen de communication radiofréquence (9) avec un relai local
b) un relai local comprenant :
- des moyens de réception (11) et de prétraitement (10) des données provenant dudit capteur (1 , le prétraitement comprenant l'horodatage des données
- un moyen de communication (13) avec un serveur distant pour la transmission des données horodatées
c) un serveur distant configuré pour exécuter un traitement des données transmises par ledit relai local pour calculer des informations de caractérisation et la transmission desdites informations à un équipement connecté distant
dans lequel ledit traitement consiste à :
- enregistrer dans une mémoire lesdites données horodatées, dans un espace spécifique audit relai local, lesdites informations horodatées présentant une fréquence d'actualisation temporelle supérieure à 200 millisecondes
- effectuer un prétraitement consistant à éliminer des données horodatées par application d'un filtre de conformité
- appliquer un traitement d'apprentissage automatique auxdites données pour calculer des profils de consommation associés à un identifiant d'un type d'équipement.

2. Système de caractérisation de la consommation électrique selon la revendication 1 **caractérisé en ce que** ledit serveur comporte une pluralité d'espaces mémoires spécifiques pour enregistrer dans chacun les données provenant d'un relai local particulier, et **en ce que** le traitement d'apprentissage automatique est appliqué aux données horodatées provenant d'une pluralité d'espaces mémoires spécifiques.

3. Système de caractérisation de la consommation électrique selon la revendication 1 **caractérisé en ce que** ledit serveur comporte en outre des moyens pour produire une alerte numérique en fonction du résultat du traitement d'apprentissage automatique.

4. Système de caractérisation de la consommation électrique selon la revendication 1 **caractérisé en ce que** ledit relai local comporte des capteurs d'environnement local.

5. Système de caractérisation de la consommation électrique selon la revendication 1 **caractérisé en ce que** ledit relai local comporte des moyens d'horodatage des données transmises par le capteur.

6. Système de caractérisation de la consommation électrique selon la revendication 1 **caractérisé en ce que** un boîtier dudit capteur (1) comprend un périphérique (5) constitué par une pièce (5) autocollante pouvant être collé sur la face avant du compteur, s'ouvrant sur un capteur photosensible (6) détectant les impulsions lumineuses et les transmettant à un circuit électronique intégré dans le boîtier (1).

7. Système de caractérisation de la consommation électrique selon la revendication précédente **caractérisé en ce que** ledit boîtier (1) comporte un calculateur (8) pilotant un module de radio transmission (9) pour la transmission des données vers le relai local.

8. Système de caractérisation de la consommation électrique selon la revendication 1 **caractérisé en ce que** ledit serveur est commandé par un code informatique pour l'exécution de traitements des données enregistrées pour un site afin d'en extraire des valeurs d'entrée pour les algorithmes d'apprentissage machine.

9. Système de caractérisation de la consommation électrique selon la revendication précédente **caractérisé en ce que** lesdits traitements comportent :
• un lissage des données enregistrées pour un site, par un calcul d'une valeur moyenne sur une fenêtre temporelle glissante
• un découpage des données enregistrées et des données lissées pour un site en un ensemble de fenêtres d'une durée de Nᵢ minutes Nᵢ variant en fonction du type d'appareil à détecter , et décalées les unes par rapport aux autres de Mᵢ minutes Mᵢ variant en fonction de Nᵢ
• une décomposition des fenêtres en transformée de Fourier, en transformée en ondelettes et en régression locale type LOESS
• une étape d'Analyse en Composantes Principales PCA réalisée sur l'ensemble des vecteurs afin de réduire leur dimension à Dᵢ compris entre 10 à 1000
• un traitement de K-Moyennes exécuté sur l'ensemble des vecteurs réduits pour déterminer Kᵢ modes de fonctionnement différents
• la comparaison des résultats de l'opération de K-Moyennes avec des motifs de consommations connues.

## Patentansprüche

1. System zur Charakterisierung des Verbrauchs eines Fluids einer Gruppe von Geräten, die von einem lokalen Netzwerk versorgt werden, das mit einem messtechnischen Zähler (2) ausgestattet ist, der eine visuelle Verbrauchsinformation liefert, umfassend:
a) einen Sensor (1), der an dem Zähler anbringbar ist, umfassend:
- ein Mittel zum Erfassen der visuellen Informationen (6)
- ein Hochfrequenzkommunikationsmittel (9) mit einem lokalen Relais
b) ein lokales Relais, umfassend:
- Mittel zum Empfangen (11) und Vorverarbeiten (10) der von dem Sensor (1) kommenden Daten, wobei die Vorverarbeitung das Zeitstempeln der Daten umfasst
- ein Kommunikationsmittel (13) mit einem entfernten Server zur Übertragung der zeitgestempelten Daten
c) einen entfernten Server, der konfiguriert ist, um eine Verarbeitung der von dem lokalen Relais übertragenen Daten zum Berechnen der Charakterisierungsinformationen und die Übertragung der Informationen an ein fernverbundenes Gerät durchzuführen, wobei die Verarbeitung besteht aus:
- Aufzeichnen der zeitgestempelten Daten in einem Speicher an einem für das lokale Relais spezifischen Platz, wobei die zeitgestempelten Informationen eine zeitliche Aktualisierungsfrequenz von mehr als 200 Millisekunden aufweisen
- Durchführen einer Vorverarbeitung, die in einem Entfernen der zeitgestempelten Daten durch Anwenden eines Konformitätsfilters besteht
- Anwenden einer automatischen Lernverarbeitung auf die Daten, um Verbrauchsprofile zu berechnen, die einer Kennung eines Gerätetyps zugeordnet sind.

2. System zur Charakterisierung des Stromverbrauchs nach Anspruch 1, **dadurch gekennzeichnet, dass** der Server mehrere spezifische Speicherplätze zum Aufzeichnen der von einem bestimmten lokalen Relais kommenden Daten an jedem umfasst und dass die automatische Lernverarbeitung auf die zeitgestempelten Daten angewendet wird, die aus mehreren spezifischen Speicherplätzen stammen.

3. System zur Charakterisierung des Stromverbrauchs nach Anspruch 1, **dadurch gekennzeichnet, dass** der Server ferner Mittel zum Erzeugen eines digitalen Alarms in Abhängigkeit von dem Ergebnis der automatischen Lernverarbeitung umfasst.

4. System zur Charakterisierung des Stromverbrauchs nach Anspruch 1, **dadurch gekennzeichnet, dass** das lokale Relais lokale Umgebungssensoren umfasst.

5. System zur Charakterisierung des Stromverbrauchs nach Anspruch 1, **dadurch gekennzeichnet, dass** das lokale Relais Mittel zum Zeitstempeln der von dem Sensor übertragenen Daten umfasst.

6. System zur Charakterisierung des Stromverbrauchs nach Anspruch 1, **dadurch gekennzeichnet, dass** ein Gehäuse des Sensors (1) einen Umfang (5) umfasst, der aus einem selbstklebenden Teil (5) besteht, der auf die Vorderseite des Zählers geklebt werden kann, sich zu einem lichtempfindlichen Sensor (6) öffnet, der die Lichtimpulse erfasst und an eine im Gehäuse (1) integrierte elektronische Schaltung überträgt.

7. System zur Charakterisierung des Stromverbrauchs nach vorhergehendem Anspruch, **dadurch gekennzeichnet, dass** das Gehäuse (1) einen Rechner (8) umfasst, der ein Funkübertragungsmodul (9) zum Übertragen von Daten an das lokale Relais steuert.

8. System zur Charakterisierung des Stromverbrauchs nach Anspruch 1, **dadurch gekennzeichnet, dass** der Server durch einen Maschinencode zur Ausführung der Verarbeitungen von für einen Standort aufgezeichneten Daten gesteuert wird, um daraus Eingangswerte für die Algorithmen des maschinellen Lernens zu extrahieren.

9. System zur Charakterisierung des Stromverbrauchs nach vorhergehendem Anspruch, **dadurch gekennzeichnet, dass** die Verarbeitungen umfassen:
• eine Glättung der für einen Standort aufgezeichneten Daten durch Berechnung eines Durchschnittswerts über ein gleitendes Zeitfenster
• ein Clipping der aufgezeichneten Daten und der geglätteten Daten für einen Standort in einen Satz von Fenstern einer Dauer von Nᵢ Minuten, wobei Nᵢ in Abhängigkeit von der zu erfassenden Vorrichtung variiert, und die gegeneinander um Mᵢ Minuten verschoben sind, wobei Mᵢ in Abhängigkeit von Nᵢ variiert
• eine Zerlegung der Fenster in eine Fourier-Transformation, eine Wavelet-Transformation und eine lokale Regression (LOESS-Typ)
• einen Schritt einer Hauptkomponentenanalyse HKA, der für alle Vektoren durchgeführt wird, um ihre Dimension auf Dᵢ so zu reduzieren, dass sie zwischen 10 und 1000 liegt
• eine K-Means-Verarbeitung, die an dem Satz reduzierter Vektoren ausgeführt wird, um (Kᵢ) verschiedene Betriebsmodi zu bestimmen
• den Vergleich der Ergebnisse des K-Means-Betriebs mit bekannten Verbrauchsmustern.

## Claims

1. System for characterizing the consumption of a fluid by a set of apparatuses supplied by a local network provided with a metrological meter (2) which delivers visual consumption information, comprising:
a) a sensor (1) suitable for being affixed to said meter, comprising:
- a means (6) for acquiring said visual information
- a radiofrequency communication means (9) with a local relay
b) a local relay comprising:
- receiving means (11) and pre-processing means (10) for data from said sensor (1), the pre-processing comprising time-stamping the data
- a means (13) for communicating with a remote server for the transmission of the time-stamped data
c) a remote server configured to execute processing of the data transmitted by said local relay in order to calculate characterization information, and to transmit said information to a remote connected apparatus, wherein said processing consists of:
- saving said time-stamped data in a memory, in a space specific to said local relay, said time-stamped information having a temporal update frequency greater than 200 milliseconds
- performing pre-processing which consists of removing the time-stamped data by applying a compliance filter
- applying machine learning processing to said data in order to calculate consumption profiles associated with an identifier of a type of apparatus.

2. System for characterizing electrical consumption according to claim 1, **characterized in that** said server comprises a plurality of specific memory spaces for saving the data from a particular local relay in each space, and **in that** the automatic learning processing is applied to the time-stamped data from a plurality of specific memory spaces.

3. System for characterizing electrical consumption according to claim 1, **characterized in that** said server further comprises means for producing a digital alert according to the result of the machine learning processing.

4. System for characterizing electrical consumption according to claim 1, **characterized in that** said local relay comprises local environment sensors.

5. System for characterizing electrical consumption according to claim 1, **characterized in that** said local relay comprises means for time-stamping the data transmitted by the sensor.

6. System for characterizing electrical consumption according to claim 1, **characterized in that** a housing of said sensor (1) comprises a peripheral device (5) consisting of a self-adhesive part (5) which can be stuck to the front face of the meter and which opens onto a photosensitive sensor (6) that detects the light pulses and transmits them to an electronic circuit integrated in the housing (1).

7. System for characterizing electrical consumption according to the preceding claim, **characterized in that** said housing (1) comprises a computer (8) that controls a radio transmission module (9) for transmitting the data to the local relay.

8. System for characterizing electrical consumption according to claim 1, **characterized in that** said server is controlled by a computer code for executing processing of the data saved for a site in order to extract therefrom input values for the machine learning algorithms.

9. System for characterizing electrical consumption according to the preceding claim, **characterized in that** said processing comprises:
• smoothing the data saved for a site, by calculating an average value over a sliding time window
• dividing the saved data and the smoothed data for a site into a set of windows which have a duration of Nᵢ minutes, Nᵢ varying according to the type of device to be detected, and are shifted with respect to one another other by Mᵢ minutes, Mᵢ varying as a function of Nᵢ
• decomposing the windows into a Fourier transform, into a wavelet transform and into a (LOESS type) local regression
• a PCA principal component analysis step carried out on the set of vectors in order to reduce their dimension to Dᵢ between 10 and 1000
• K-means processing executed on the set of reduced vectors to determine (Kᵢ) different operating modes
• comparing the results of the K-means operation with known consumption patterns.
